# EUROPÄISCHE PATENTSCHRIFT

(11) **EP 1 727 693 B1**
(45) Veröffentlichungstag und Bekanntmachung des Hinweises auf die Patenterteilung: **05.11.2008**
(21) Anmeldenummer: 05715038.5
(22) Anmeldetag: 01.03.2005
(51) Int. Cl.: B60J 5/10

(54) **BETÄTIGUNGSEINRICHTUNG FÜR EIN KLAPPENELEMENT**
ACTUATION DEVICE FOR A FLAP ELEMENT
DISPOSITIF D'ACTIONNEMENT POUR UN ELEMENT VOLET

(30) Priorität: 18.03.2004 DE 102004013403
(43) Veröffentlichungstag der Anmeldung: 06.12.2006
(73) Patentinhaber: Wilhelm Karmann GmbH, 49084 Osnabrück (DE)
(72) Erfinder: TROST, Daniel, 49086 Osnabrück (DE)
(86) Internationale Anmeldenummer: PCT/DE2005/000337
(87) Internationale Veröffentlichungsnummer: WO 2005/092652

(56) Entgegenhaltungen:
- EP-A- 1 228 914
- EP-A- 1 386 768
- WO-A-20/05049354
- DE-A1- 19 834 850
- DE-U1- 20 012 866

## Beschreibung

Die Erfindung betrifft eine Betätigungseinrichtung für ein Klappenelement für eine variable Verdeckwanne, welche die Bewegung eines Klappenelements aus einer ersten Position in eine zweite Position beziehungsweise aus der zweiten Position in die erste Position unterstützt.

Entsprechende Verdeckwannen sind an Fahrzeugen mit Klapp- oder Faltverdeck vorgesehen, um bei geschlossenem Fahrzeug, d.h. bei einer Situation, in der das Klapp- oder. Faltverdeck nicht in die Verdeckwanne eingebracht ist, den unter der Verdeckwanne befindlichen Stauraum besser nutzen zu können. Dazu wird die Verdeckwanne in eine Hochlage gebracht, so dass ein möglichst großes Volumen unterhalb der variablen Verdeckwanne zur Aufnahme von Gepäckstücken entsteht. Wird andererseits das Klapp-oder Faltverdeck geöffnet, so wird das Klapp- oder Faltverdeck in der Verdeckwanne abgelegt, die in eine Tieflage verstellt ist.

Aus der DE 197 13 606 C1 ist eine Betätigungsvorrichtung für eine variable Verdeckwanne bekannt, die einen aus drei plattenförmigen Wandelementen gebildeten Verdeckkastenboden bewegt. Die Bewegung wird über einen winkelförmigen Handgriff ausgelöst, der vom Gepäckraum zugänglich ist und an einem der Wandelemente fest gelagert ist. An einem weiteren Wandelement greift ein Ende einer Gasfeder an, die schwenkbar an der Karosserie an ihrem anderen Ende gelagert ist. Die Gasfeder unterstützt die Bewegung der Verdeckwanne aus der Tieflage in die Hochlage, wobei anfangs durch die Gasfeder die Bewegung etwas erschwert ist. Zusätzlich weist die Betätigungsvorrichtung der DE 197 13 606 C1 einen Verriegelungshaken auf, der in Hochlage der Verdeckwanne in die Verriegelungsstellung schwenkbar ist und somit die Lage eines der Wandelemente fixiert, um Bewegungen des Verdeckkastenbodens zu verhindern. Der Verriegelungshaken ist von einer, Übertotpunktfeder wechselweise entweder in die Entriegelungsstellung oder in die Verriegelungsstellung belastet.

Aus der DE 198 34 850 A1, die den Oberbegriff von Anspruch 1 bildet, ist ein Kraftfahrzeug mit einem versenkbaren Verdecksystem bekannt, wobei eine Trenneinrichtung vorgesehen ist, mit welcher der Verdeckkasten vom Kofferraum getrennt ist. Der Verdeckkasten mit einem Verdeckdeckel wird für das Verstauen des versenkten Verdecks benötigt. Die Trenneinrichtung ist zwischen einer ersten nicht trennenden Stellung, bei der die maximale Ladefläche des Kofferraums zur Verfügung steht, und einer zweiten trennenden Stellung verschwenkbar. In der trennenden Stellung wird durch die Anordnung der Trenneinrichtung der Heckstauraum in zwei Teile unterteilt, wovon einer als Verdeckkasten zur Aufnahme des versenkten Verdecks dient und der andere Teil als Restkofferraum verbleibt. Die Trenneinrichtung bildet somit einen Teil des Verdeckkastens. Zum Verschwenken der Trenneinrichtung ist diese mit der Betätigungseinrichtung des Verdecks, insbesondere deren Hauptsäule, gekoppelt. Die Verschwenkung der Trenneinrichtung erfolgt zwangsgesteuert über die Steuerung der Verdeckbetätigungseinrichtung. Die Bewegung des Verdeckkastens bzw. der Trenneinrichtung unterstützende Elemente und diese in den jeweiligen Positionen fixierende Elemente sind an der Betätigungseinrichtung nicht vorgesehen.

Es ist die Aufgabe der Erfindung, eine Betätigungseinrichtung für ein Klappenelement, insbesondere einer variablen Verdeckwanne, vorzusehen, die kompakt ist, weniger Bauraum erfordert und kostengünstig ist.

Diese Aufgabe wird durch eine Betätigungseinrichtung mit den Merkmalen des Anspruchs 1 gelöst. Bevorzugte Ausführungsformen sind durch die abhängigen Ansprüche angegeben.

Der Erfindung liegt der Gedanke zugrunde, die Betätigungsmechanismen, die diese Gasdruckfedern verwenden, durch eine Einrichtung zu ersetzen, mittels derer einerseits die Bewegung der Verdeckwanne aus der ersten in die zweite Position und umgekehrt unterstützt werden kann und andererseits gleichzeitig die Verriegelungsfunktion in den jeweiligen Endstellungen übernommen werden kann. Durch die feste Lagerung des Federelements muss im Gepäckraumbereich kein Bewegungsraum für das Federelement beziehungsweise einen das Federelement abstützenden Halter vorgesehen werden. Vielmehr kann das Federelement kompakt an einem Ort im Heckbereich angebracht werden, an dem es wenig störend untergebracht werden kann.

Unter "ortsfester Lagerung" ist dabei eine Lagerung zu verstehen, bei der sowohl translatorische Belegungen als auch rotatorische Bewegungen des Federelements an der Lagerstelle ausgeschlossen sind. Ist die Lagerstelle beispielsweise an dem Heckdeckel des Kraftfahrzeugs vorgesehen, so ist selbstverständlich das Federelement beziehungsweise der das Federelement haltende Halter mit dem Heckdeckel mitbeweglich, jedoch nicht relativ dazu. Außerdem ist eine elastische Deformation des Federelements bei Krafteinwirkung auf das Federelement möglich. Dadurch, dass das Federelement auf dem Weg des Wandelements zwischen dessen erster und zweiter Position einen Ort maximaler Auslenkung durchläuft, die durch eine Wechselwirkung mit dem Wandelement hervorgerufen wird, wird die Rückstellkraft des Federelements am Ort maximaler Auslenkung ebenfalls maximal. Zwar drückt ähnlich wie bei den bekannten Betätigungseinrichtungen am Anfang des Bewegungswegs des Wandelements das Federelement gegen die Bewegungsrichtung, so dass zusätzlich zur Gewichtskraft der Verdeckwanne die Federkraft überwunden werden muss, bis der Ort maximaler Auslenkung erreicht ist. Anschließend wirkt die Rückstellkraft des Federelements jedoch unterstützend, so dass sie den weiteren Bewegungsweg des Wandelements durch ihre Rückstellkraft unterstützt und schließlich das Wandelement in der Endlage hält. Die arretierende wirkung der Federkraft ist darauf zurückzuführen, dass bei einer Bewegung aus der Endlage wiederum die Kraft des Federelements überwunden werden muss.

Ein im wesentlichen unbelasteter Zustand in der ersten und zweiten Position des Wandelements, d.h. in den Endlagen des Wandelements, bedeutet, dass das Federelement in diesen Positionen die geringste Auslenkung aufweist, die es auf dem Weg zwischen der ersten und zweiten Position erfährt. Dabei umfasst dies auch einen Zustand, bei dem eine Vorbelastung des Federelements gegeben ist, wobei diese Vorbelastung jedoch den Minimalwert der Auslenkung beziehungsweise der Rückstellkraft auf dem Weg zwischen erster und zweiter Position darstellt. Eine solche Vorbelastung ist wünschenswert, um ein unbeabsichtigtes Lösen des Wandelements zu verhindern.

Nachfolgend wird die Erfindung beispielhaft anhand der beigefügten Figuren beschrieben, in denen:
Fig. 1 den Heckbereich eines Fahrzeugs zeigt, wobei eine variable Verdeckwanne und eine zugehörigen Betätigungseinrichtung gemäß der Erfindung schematisch angedeutet sind;
Fig. 2 eine Ausführungsform der erfindungsgemäßen Betätigungseinrichtung in der ersten Position zeigt; und
Fig. 3 die Betätigungseinrichtung aus Fig. 2 in der zweiten Position zeigt.

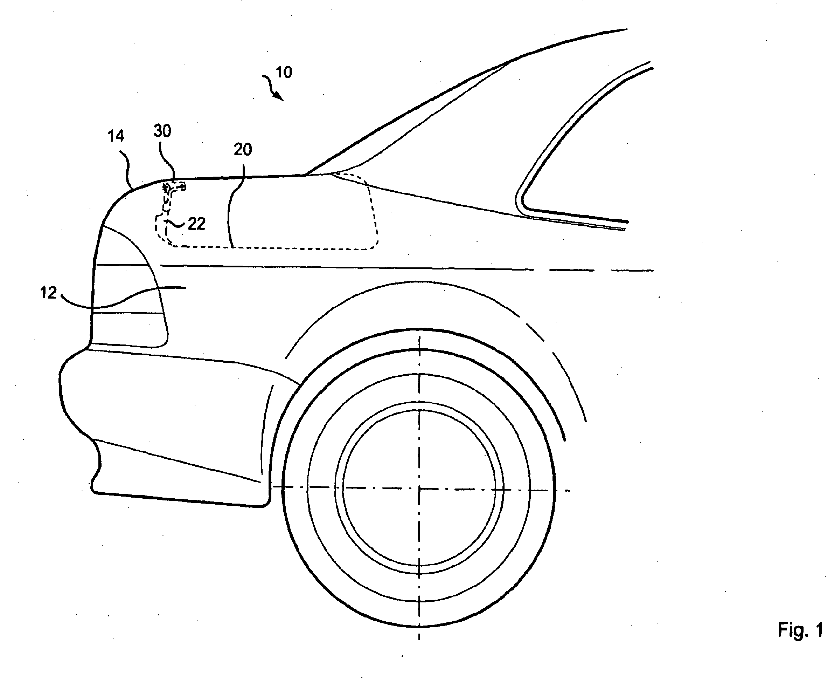

Fig. 1 zeigt den Heckbereich 10 eines Kraftfahrzeugs. Im Inneren des Heckraums und insbesondere des Kofferraums 12 ist eine Verdeckwanne 20 angeordnet, die in Fig. 1 mit gestrichelten Linien angedeutet ist. Die Verdeckwanne 20 ist am Heckdeckel 14 gelagert. Außerdem ist die Verdeckwanne 20 zwischen einer ersten Position, die in Fig. 1 dargestellt ist, in der sie zur Aufnahme eines Klapp- oder Faltdachs bereit ist, und einer zweiten Position (nicht dargestellt) bewegbar, in der sie flach anliegend am Heckdeckel 14 zusammengefaltet liegt, damit der Kofferraum 12 möglichst viel Stauraum für Gepäckstücke und ähnliches bieten kann. Die Konstruktion der Verdeckwanne 20 aus mehreren miteinander gelenkig verbundenen Wandelementen ist an sich bekannt.

An einem der Wandelemente 22 beziehungsweise an einem mit einem Wandelement verbundenen Klappenelement ist ein Betätigungsmechanismus 30 für die Verdeckwanne 20 angebracht, um sie zwischen der ersten und der zweiten Position zu bewegen. Der Betätigungsmechanismus 30 dient dabei insbesondere der Unterstützung der Bewegung der Verdeckwanne 20. Ausgelöst wird die Bewegung z.B. manuell mittels eines Hebels oder Griffs oder durch einen nicht dargestellten elektrischen Antrieb.

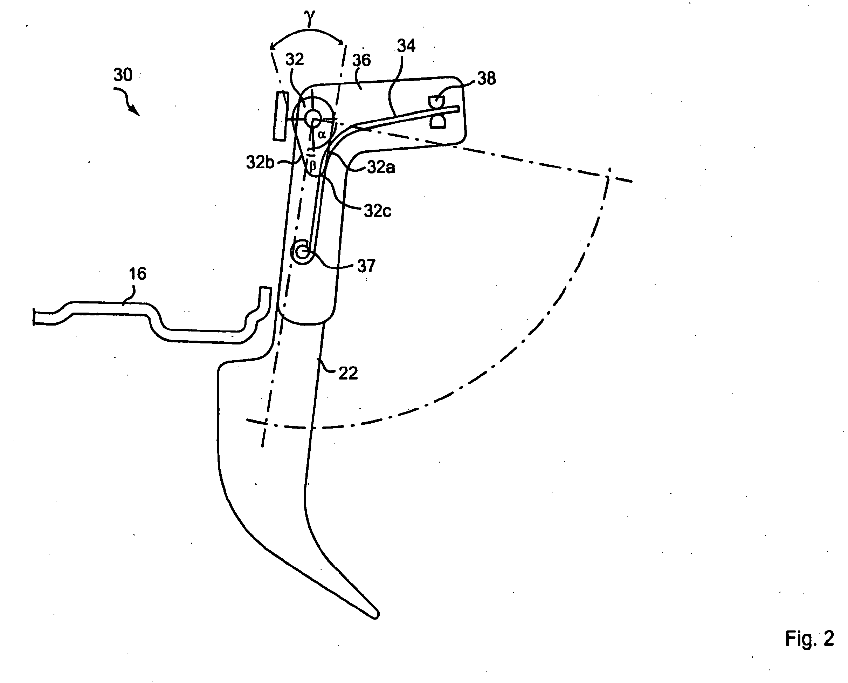

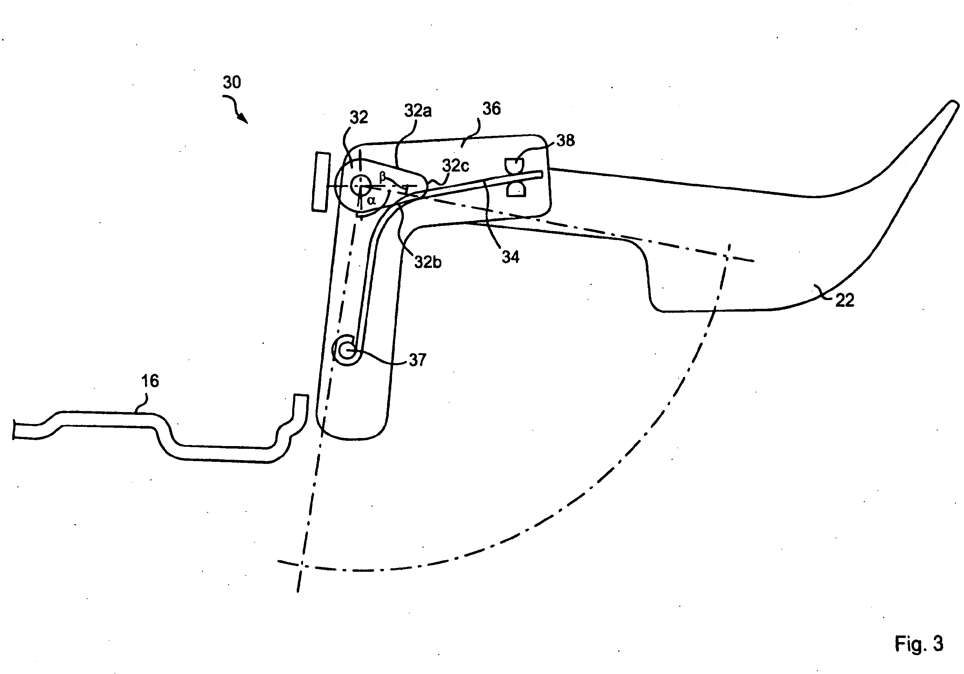

Der Betätigungsmechanismus 30 für die Verdeckwanne wird unter Verweis auf Fig. 2 und 3 im folgenden erläutert. Fig. 2 zeigt den Betätigungsmechanismus 30 in der ersten Position (Tieflage der Heckwanne, entsprechend der Garstellung in Fig. 1) und Fig. 3 zeigt den Betätigungsmechanismus 30 in der zweiten Position (Hochlage der Verdeckwanne, zusammengefaltete Verdeckwannenposition). Die Betätigungseinrichtung 30 enthält ein Wand- oder Kappenelement. 22 der Verdeckwanne 20, das entweder durch ein Wandelement der Verdeckwanne an sich gebildet ist oder aber an einem solchen als hebelartiges Element angebracht ist. Das Wandelement 22 der Verdeckwanne ist zwischen der ersten Position und einer zweiten Position um den Winkel α schwenkbar, der durch die Verbindungslinien zwischen jeweils dem Schwerpunkt des Wandelements 22 und seinem Drehpunkt in der ersten beziehungsweise in der zweiten Position eingeschlossen wird.

An dem Wandelement 22 ist ein nockenförmiges Hebelelement 32 vorgesehen. Das Hebelelement 32 ist an der Schwenkachse des Wandelements 22 starr mit diesem verbunden und steht von dem Wandelemente 22 in einer Richtung senkrecht zur Drehebene des Wandelements 2a vor (eine Richtung senkrecht zur Zeichenebene in Fig. 2 und 3). Das Hebelelement ist mit zwei im wesentlichen planen Seitenflächen 32a, 32b versehen, die senkrecht zur Ebene der Schwenkbewegung liegen und einen Winkel γ, vorzugsweise 0° < γ < 90°, einschließen. Die beiden Seitenflächen 32a, 32b sind durch eine gebogene Fläche 32c (Kreiszylindersegment) verbunden, die ebenfalls senk-recht zur Ebene der Drehung liegt, so dass kein spitzer, scharfkantiger Übergang zwischen den Seitenflächen 32a, 32b vorhanden ist.

Das Hebelelement 32 ist ferner derart ausgerichtet, dass es sowohl in der ersten Endstellung als auch in der zweiten Endstellung (Fig. 3) mit einer Blattfeder 34 an einer der Seitenflächen 32a, 32b in Berührung ist, die fest eingespannt gelagert ist. Dazu ist das Hebelelement 32 bezüglich des Klappenelements 22 um einen Winkel β verdreht. Dies führt dazu, dass in der ersten Position (Fig. 2) eine erste Seitenwandfläche 32a des Hebelelements 32 in Berührung mit der Blattfeder ist und in der zweiten Position (Fig. 3) eine der ersten Seitenwandfläche 32a gegenüberliegende Seitenwandfläche 32b des Hebelelements 32 die Blattfeder 34 berührt.

Zwischen dem Wandelement 22 und dem Hebelelement 32 ist bei der dargestellten Ausführungsform ein Halter 36 vorgesehen, der im wesentlichen L-förmig in der Draufsicht in Fig. 2 bis 3 ist und der fest, d.h. translatorisch und rotatorisch unbeweglich, an der Fahrzeugkarosserie, beispielsweise dem Heckdeckel 14, gelagert ist. Bei einer Schwenkbewegung des Wandelements 22 und des Hebelelements 32 schwenkt der Halter 36 somit nicht mit. Die Blattfeder 34 ist am Halter 36 an einem ersten Anbindungspunkt 37 festgelegt. Sie ist als streifenförmige Blattfeder 34 gestaltet, wobei ihr gegenüberliegendes Ende in einer Führung 38 in Längsrichtung verschiebbar aufgenommen ist, so dass ein Bereich der Blattfeder 34 in der Führung verbleibt und nicht ähnlich dem freien Ende eines fest eingespannten Balkens ausweicht, wenn die Blattfeder 34 durch das Hebelelement 32 bei der Schwenkbewegung des Wandelements 22 belastet wird. Vielmehr ist lediglich ein elastisches Biegen der Blattfeder 34 möglich. Die streifenförmige Blattfeder 34 folgt im wesentlichen der Gestalt des Halters 36, d.h. sie ist ebenfalls L-förmig bzw. gebogen. Die Blattfeder 34 ist vorzugsweise derart gekrümmt, dass ihr Krümmungsradius entgegengesetzt zur Krümmung des Übergangsbereichs 32c des Hebelements 32 ist. Der Halter 36 ebenso wie die Blattfeder 34 sind jedoch nicht auf die dargestellten Gestalten eingeschränkt. Vielmehr ist sowohl für den Halter 36 als auch für das Federelement 34 jede Gestalt denkbar, solange die gewünschte Wechselwirkung mit dem Hebelelement 32 beziehungsweise dem Wandelement 22 möglich ist.

Die Gestalt und die Form des Hebelelements 32, des Halters 36, des Wandelements 22 sowie der Blattfeder 34 sind dabei zusätzlich an die angrenzenden Fahrzeugbauteile, wie zum Beispiel eine Verkleidung 16, angepasst, so dass sie bei ihrer Bewegung nicht gegen angrenzende Bauteile schlagen oder stoßen.

Zur Veränderung der Position der in Fig. 2 und 3 nicht dargestellten variablen Verdeckwanne, d.h. des Wandelements 22 und der damit verbundenen Elemente, wird z.B. manuell oder elektrisch unterstützt die Bewegung der Verdeckwanne initiiert. Dazu wird beispielweise ein Griff verschwenkt, der an einem Wandelement der Verdeckwanne 20 angebracht ist, und somit ein erster Bewegungsweg zurückgelegt.

Beispielsweise wird aus der in Fig. 2 dargestellten Position das Wandelement 22 in der Richtung gegen den Uhrzeigersinn verschwenkt. Durch die Verschwenkung des Wandelements 22 wird das Hebelelement 32 mitbewegt und verschwenkt, wobei es mit seiner Seitenwand 32a gegen das als Blattfeder 34 ausgebildete Federelement an einem der Schenkel der Blattfeder 34 stößt und während der Schwenkbewegung in Anlage bleibt. Bei einer fortgesetzten Schwenkbewegung gegen den Uhrzeigersinn wird somit die Blattfeder 34 deformiert, wobei ihre Rückstellkraft bis zu einem Punkt maximaler Auslenkung zunimmt. In diesem ersten Schwenkbereich, der aus der in Fig. 2 dargestellten Position bis etwa zu einer Position reicht, die auf der Winkelhalbierenden des Schwenkwinkels α liegt, nimmt somit die Rückstellkraft, die auf das Hebelelement 32 und damit das Wandelement 22 wirkt, fortgesetzt zu, wobei diese Rückstellkraft das Wandelement 22 in die erste Position (Fig. 2) zurückdrückt. Überwindet man durch eine fortgesetzte Schwenkbewegung den Ort maximaler Auslenkung (Totpunkt), an dem die Verbindung zwischen dem Drehpunkt des Hebelelement und dessen Berührungspunkt zur Blattfeder senkrecht zu einer Tangente an die Blattfeder liegt, gelangt die zweite Seitenfläche 32b des Hebelelements 32 in Berührung mit der Blattfeder. Zum Sicherstellen einer gleichmäßigen Bewegung in diesem Übergangsbereich dient die kreisbogenförmige Seitenwandfläche 32c. Diese Kreisbogenform im Übergangsbereich verhindert eine übermäßige Zunahme der zu überwindenden Kraft bei der fortgesetzten Schwenkbewegung des Wandelements 22.

Auf der zweiten Hälfte des Bewegungswegs, d.h. dem Teilstück des Bewegungswegs des Wandelements 22, der zwischen der Winkelhalbierenden des Winkels α und der zweiten Endstellung des Wandelements 22 liegt, wirkt die bei fortgesetzter Schwenkbewegung nunmehr abnehmende Rückstellkraft der Blattfeder 34 unterstützend für die weitere Schwenkbewegung. Somit wird das Wandelement 22 nach Überwindung des Totpunkts (Ort maximaler Auslenkung der Blattfeder 34) durch die Rückstellkraft der Blattfeder ohne weitere Krafteinwirkung von außen in die zweite Position (Fig. 3) gedrückt_{.}

Da sowohl in der ersten als auch in der zweiten Position die im wesentlichen geradlinigen Seitenwandflächen 32b beziehungsweise 32a in Berührung mit der Blattfeder sind, dient die Betätigungseinrichtung 30 gleichzeitig als Sicherungseinrichtung, um das Wandelement 22 in der ersten beziehungsweise der zweiten Position zu halten. Die geraden Wandflächen 32a, 32b stellen sicher, dass ein gewisses Maß an Kraft aufgewendet werden muss, um in die Nähe des Totpunkts der Blattfeder 34 zu gelangen, so dass ein unerwünschtes Lösen einer Position des Wandelements 22 durch beispielsweise auf das Fahrzeug aufgebrachte Stöße verhindert wird. Dies wird dadurch erreicht, dass beispielsweise ausgehend von der in Fig. 2 dargestellten Position zunächst die geradlinige Seitenwandfläche 32a des Hebelelements 32 mit einem geraden Teilstück der Blattfeder 34 in Berührung ist und in der Endphase der Schwenkbewegung wiederum eine geradlinige Seitenwandfläche 32b des Hebelelements mit einem geraden Teilstück der Blattfeder 34 in Berührung ist.

Vorzugsweise ist das derartig geformte Hebelelement 32 unmittelbar am Drehpunkt des Wandelements 22 angeordnet, da dadurch Hebelkräfte klein gehalten werden können.

Der wesentliche Aspekt der Erfindung liegt somit darin, ein verhältnismäßig aufwendige Konstruktion eines Betätigungsmechanismus, der durch eine Gasfeder unterstützt wird, durch eine einfachere Vorrichtung zu ersetzten, die gleichzeitig die Funktion einer Verriegelung in den Endstellungen übernimmt.

### Bezugszeichen

| | | |
|---|---|---|
| 10 Heckbereich eines Fahrzeugs | 12 | Kofferraum |
| 14 Heckdeckel | 16 | Verkleidung |
| 20 Verdeckwanne | 22 | Wandelement |
| 30 Betätigungseinrichtung | 32 | Hebelelement |
| 32a erste Seitenwandfläche | | |
| 32b zweite Seitenwandfläche | | |
| 32c kreisbogenförmige Seitenwandfläche | | |
| 34 Blattfeder | 36 | Halter |
| 37 Anbindungspunkt | 38 | Führung |

## Patentansprüche

1. Betätigungseinrichtung (30) für ein Klappenelement einer variablen Verdeckwanne (20) mit mindestens einem zwischen einer ersten und einer zweiten Position drehbaren Wandelement (22), **dadurch gekennzeichnet, dass** die Betätigungseinrichtung ein ortsfest gelagertes Federelement (34) enthält, das bei Drehung des Wandelements (22) zwischen dessen erster und zweiter Position durch eine Wechselwirkung mit dem Wandelement einen Ort maximaler elastischer Verformung durchläuft und das in der ersten und zweiten Position einen im Wesentlichen unbelasteten Zustand einnimmt.

2. Betätigungseinrichtung (30) nach Anspruch 1, **dadurch gekennzeichnet, dass** das Federelement (34) eine Blattfeder ist.

3. Betätigungseinrichtung (30) nach Anspruch 2, **dadurch gekennzeichnet, dass** ein ortsfester Halter (36) vorgesehen ist, an dem ein Ende der Blattfeder (34) im wesentlichen starr in Längsrichtung und ein anderes Ende der Blattfeder in deren Längsrichtung beweglich abgestützt ist.

4. Betätigungseinrichtung (30) nach einem der Ansprüche 2 oder 3, **dadurch gekennzeichnet, dass** die Blattfeder (34) zwei über einen gebogenen Bereich verbundene Schenkel aufweist, wobei der gebogene Bereich derart gebogen und angeordnet ist, dass seine Biegung innerhalb eines vom Wandelement (22) bei seiner Drehbewegung überstrichenen Winkels (α) liegt, und der Mittelpunkt seines Biegeradius und die Drehachse des Wandelements auf gegenüberliegenden Seiten der Blattfeder liegen.

5. Betätigungseinrichtung (30) nach einem der vorhergehenden Ansprüche, **dadurch gekennzeichnet, dass** das Federelement (34) mit einem Hebelelement (32) zusammenwirkt, das starr am Wandelement (22) vorhanden ist.

6. Betätigungseinrichtung (30) nach Anspruch 5, **dadurch gekennzeichnet, dass** das Hebelelement (32) in der Nähe der Drehachse des Wandelements (22) an diesem befestigt ist.

7. Betätigungsvorrichtung nach Anspruch 5 oder 6, **dadurch gekennzeichnet, dass** das Hebelelement nockenförmig ist.

8. Betätigungseinrichtung (30) nach einem der vorhergehenden Ansprüche, **dadurch gekennzeichnet, dass** der Ort maximaler Auslenkung des Federelements (34) im wesentlichen auf der Winkelhalbierenden zwischen erster und zweiter Position des Wandelements (22) liegt..

9. Betätigungseinrichtung nach einem der vorhergehenden Ansprüche, **dadurch gekennzeichnet, dass** das Federelement (34) das Wandelement (22) zumindest in der ersten oder der zweiten Position elastisch vorspannt.

## Claims

1. Actuation device (30) for a flap element of a variable top receptacle (20), having at least one wall element (22) that is pivotable between a first and a second position, **characterized in that** the actuation device comprises a fixedly-borne spring element (34) that traverses a point of maximum elastic deformation between its first and second position by interacting with the wall element during pivoting of the wall element and the spring element assumes a substantially unbiased state in the first and second position.

2. Actuation device (30) according to claim 1, **characterized in that** the spring element (34) is a leaf spring.

3. Actuation device (30) according to claim 2, **characterized in that** a fixed bracket (36) is provided, on which bracket one end of the leaf spring (34) is substantially rigidly supported in a longitudinal direction and another end of the leaf spring is movably supported in its longitudinal direction.

4. Actuation device (30) according to one of claims 2 or 3, **characterized in that** the leaf spring (34) includes two legs connected via a curved portion, wherein the curved portion is arranged and curved such that its curvature lies within an angle (α) traversed by the wall element (22) during its pivoting movement and wherein the middle point of its radius of curvature and the pivotal axis of the wall element lie on opposing sides of the leaf spring.

5. Actuation device (30) according to one of the preceding claims, **characterized in that** the spring element (34) cooperates with a lever element (32) that is fixedly present on the wall element (22).

6. Actuation device (30) according to claim 5, **characterized in that** the lever element (32) is affixed to the wall element (22) proximal to the pivotal axis of the wall element.

7. Actuation device (30) according to claim 5 or 6, **characterized in that** the lever element is cam-shaped.

8. Actuation device (30) according to one of the preceding claims, **characterized in that** the point of maximum deflection of the spring element (34) lies substantially at the bisecting line of the angle between the first and second positions of the wall element (22).

9. Actuation device (30) according to one of the preceding claims, **characterized in that** the spring element (34) elastically biases the wall element (22) at least into the first or the second position.

## Revendications

1. Dispositif d'actionnement (30) pour un élément de volet d'un logement de capote variable (20) comprenant au moins un élément de paroi (22) pouvant pivoter entre une première et une deuxième position, **caractérisé en ce que** le dispositif d'actionnement comporte un élément de ressort (34) monté de manière fixe qui, lors du pivotement de l'élément de paroi (22) entre sa première et sa deuxième position, passe par un point de déformation élastique maximale sous l'effet d'une interaction avec l'élément de paroi et qui prend un état essentiellement non chargé dans la première et la deuxième position.

2. Dispositif d'actionnement (30) selon la revendication 1, **caractérisé en ce que** l'élément de ressort (34) est un ressort à lame.

3. Dispositif d'actionnement (30) selon la revendication 2, **caractérisé en ce qu'**il est prévu un support (36) monté de manière fixe sur lequel une extrémité du ressort à lame (34) est supportée de manière essentiellement fixe dans le sens de la longueur et une autre extrémité du ressort à lame est supportée de manière mobile dans le sens de sa longueur.

4. Dispositif d'actionnement (30) selon l'une des revendications 2 ou 3, **caractérisé en ce que** le ressort à lame (34) présente deux branches reliées dans une région coudée, la région coudée étant coudée et disposée de telle manière que son coude se situe à l'intérieur d'un angle (α) parcouru par l'élément de paroi (22) lors de son mouvement de pivotement, et le point central de son rayon de courbure et l'axe de pivotement de l'élément de paroi se trouvent sur des côtés opposés du ressort à lame.

5. Dispositif d'actionnement (30) selon l'une des revendications précédentes, **caractérisé en ce que** l'élément de ressort (34) coopère avec un élément de levier (32) qui est fixé à l'élément de paroi (22).

6. Dispositif d'actionnement (30) selon la revendication 5, **caractérisé en ce que** l'élément de levier (32) est fixé à proximité de l'axe de pivotement de l'élément de paroi (22) sur ce même élément de paroi.

7. Dispositif d'actionnement (30) selon l'une des revendications 5 ou 6, **caractérisé en ce que** l'élément de levier est en forme de came.

8. Dispositif d'actionnement (30) selon l'une des revendications précédentes, **caractérisé en ce que** l'endroit de déviation maximale de l'élément de ressort (34) se situe essentiellement sur la bissectrice de l'angle entre la première et la deuxième position de l'élément de paroi (22).

9. Dispositif d'actionnement (30) selon l'une des revendications précédentes, **caractérisé en ce que** l'élément de ressort (34) contraint élastiquement l'élément de paroi (22) au moins dans la première ou la deuxième position.
